# EUROPEAN PATENT SPECIFICATION

(11) **EP 1 769 211 B1**
(45) Date of publication and mention of the grant of the patent: **23.02.2011**
(21) Application number: 05726195.0
(22) Date of filing: 04.05.2005
(51) Int. Cl.: F28F 21/08, C22C 9/04

(54) **HEAT TRANSFER TUBE CONSTRUCTED OF TIN BRASS ALLOY**
AUS EINER ZINN-MESSING-LEGIERUNG HERGESTELLTES WÄRMEÜBERTRAGUNGSROHR
TUBE DE TRANSFERT THERMIQUE CONSTITUE D'UN ALLIAGE ETAIN-LAITON

(30) Priority: 05.05.2004 US 568475 P
(43) Date of publication of application: 04.04.2007
(73) Proprietor: Luvata Oy, 02101 Espoo (FI)
(72) Inventor: Rottmann, Edward G., Bowling Green, KY 42104 (US)
(74) Representative: Olsson, Jan
(86) International application number: PCT/FI2005/000205
(87) International publication number: WO 2005/106374

(56) References cited:
- WO-A1-00/73537
- US-A- 2 131 437
- US-A- 2 369 813
- US-A- 4 935 076

## Description

### FIELD OF INVENTION

The present invention relates generally to corrosion resistant heat transfer tubes for use in air conditioning and refrigeration systems.

### BACKGROUND OF THE INVENTION

Air conditioning and refrigeration ("ACR") systems have been known to be susceptible to a unique type of corrosion known as "formicary corrosion" (also referred to as "ants nest corrosion"). Formicary corrosion is believed to occur only in copper-based alloys. It has unique morphology that appears as wandering pits in shapes reminiscent of ant nests. The pits are typically microscopic and are associated with discolorations on the surface of the copper. The discolorations can be purple, blue-gray or black and are indicative of a self-catalytic, cyclic oxidation/reduction reaction, which occurs between water-soluble copper and an organic acid complex.

Formicary corrosion may result in heat exchanger coil tube failures. Most early observations of formicary corrosion indicated the reaction initiated on the inside of the tubes and progressed to the outside. This was believed to be commonly caused by the breakdown of certain lubricants in the presence of air. These cases were often limited to certain lots and were noticed as soon as the air conditioning (AC) units were charged with refrigerant and put into service.

A relatively recent concern to the heating, ventilation and air conditioning (HVAC) industry relates to outside-to-in corrosion. About five years ago it was noticed that the number of customer complaints related to leaks in the indoor coils of vented AC systems, which are the primary form of cooling systems in the residential U.S. market, increased significantly. Further investigation revealed that the cause in more than half of the heat exchanger coil failures was formicary corrosion. It is believed that major sources of the increased occurrence of such leaks may have been due to the use of higher amounts of volatile organic compounds, increased emissions from new types of building materials and less circulation in homes due to tighter construction. Further, lowering of wall thickness in heat exchanging tubes and increased running of AC systems in hot, humid areas to control temperature and internal humidity may also be factors.

Without intending to be bound by a particular theory, it is believed that four ingredients are required for formicary corrosion to occur: the presence of copper metal, oxygen, moisture, and an organic acid (which can result from the hydrolysis or other breakdown of an oil or other organic molecule). While removal of any of these ingredients is expected to arrest the corrosion process, copper is a preferred metal for use in heat exchange systems, and therefore, there remains a need for a copper-based material for use in ACR systems that have increased resistance to formicary corrosion. Further, there is a need for heat exchange tubes for use in ACR systems that are formed from compositions resistant to formicary corrosion such that the resistance is conferred throughout the tube walls. A formicary corrosion resistant heat transfer tube of copper having a surface coating of tin or a tin alloy is known from WO-A-0073537.

### SUMMARY OF THE INVENTION

The present invention meets the above-described need by providing a heat transfer tube constructed of a tin brass alloy that is superior in resistance to formicary corrosion, and which comprises the features of claim 1. The invention also relates to the use of a tin brass alloy for forming a heat transfer tube wall as defined in claim 7.

### BRIEF DESCRIPTION OF THE DRAWINGS

The invention is illustrated in the drawings in which like reference characters designate the same or similar patents throughout the figures of which:
Figure 1 is a perspective view of a portion of a heat transfer tube;
Figure 2 is a perspective view of a plate fin type heat exchanger; and,
Figure 3 is a graphic representation of corrosion resistance data for different alloys.

### DETAILED DESCRIPTION

The present invention provides heat transfer tubes resistant to formicary corrosion. The heat transfer tubes are formed from a tin brass alloy. The tin brass alloy imparts to the heat transfer tubes increased resistance to formicary corrosion relative to prior art compositions used for making heat transfer tubes. Some examples of such prior art compositions include C220 alloy, which is a standard brass alloy, and C122 alloy, which is currently used in AC conduits. Accordingly, "formicary corrosion resistant" as used herein means increased resistance to formicary corrosion relative to the degree of formicary corrosion resistance of compositions used to make heat exchange tubes of the prior art.

In one embodiment, the heat transfer tubes of the present invention are formed from an alloy comprising copper, zinc and tin, and may or may not further comprise lead, iron, phosphorus or other elements. In a preferred embodiment, the heat transfer tubes are formed from the alloy termed C422, the composition of which is set forth in the particular embodiments described in Tables 1 and 3 below.

The following Examples are intended to illustrate the invention and are not intended to limit its scope in any way.

### EXAMPLE 1

This Example describes one embodiment of the invention. As will be clear to those skilled in the art, routine modifications and variations in this structure are also contemplated.

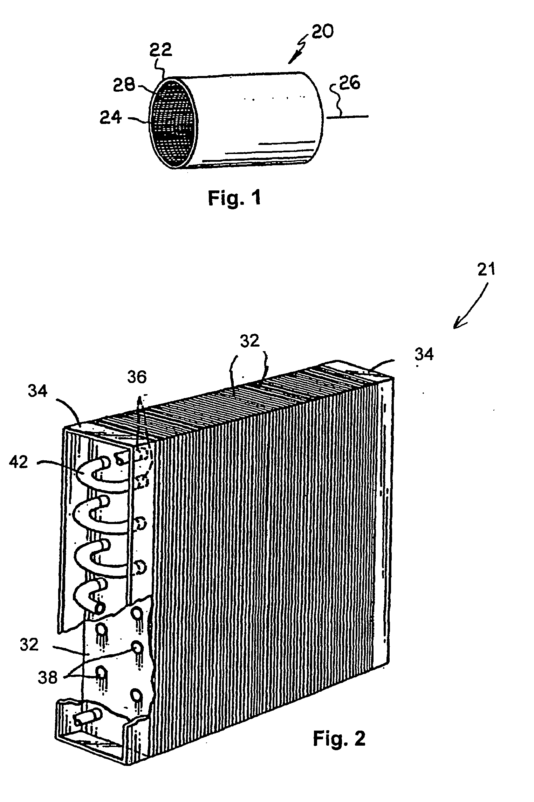

Referring to Fig. 1, there is shown generally at 20 a portion of a tube, which may be composed of a tin brass alloy and in the preferred embodiment the specific tin brass alloy No. 422. The tube 20 may be formed by many different methods including, but not limited to, welding, extrusion, and cast-and-rolling using the alloys provided in the present invention and standard methods known to those skilled in the art.

The tube 20 may be used in, for example, heating or cooling systems for heat transfer between a fluid of one temperature flowing inside the tube and a fluid of a different temperature outside the tube, wherein one example of the fluid outside the tube may be air. The tube 20 comprises a wall 22 having an inner surface 24 and a longitudinal axis 26. The inner surface may be smooth walled or may be internally enhanced with enhancements 28 as will be evident to those of ordinary skill in the art.

Turning to Fig. 2, the tube 20 of the present invention may be included in a heat exchanger assembly 21. Heat exchanger assembly 21 is one example of a heat exchanger assembly that may be used with the present invention. The present invention also applies to other types of ACR heat exchangers as will be evident to those of ordinary skill in the art.

A common method of manufacturing the heat exchanger assembly 21 is to first assemble a plurality of plate fins 32 between two tube sheets 34, then lace a plurality of hairpin tubes 36 through selected holes 38 in the plate fins 32 and similar holes 38 in each of the tube sheets 34. Next, bells are formed in the end of the hairpin tubes 36, then the legs of the tubes are expanded to insure a tight mechanical fit between the tubes and the plate fins. Because of the firm fit between the tubes and the plate fins, the heat transfer area of the heat exchanger tubes is increased by the area of the plate fins. Because of this increase in surface area, a plate fin and tube heat exchanger offers improved heat transfer performance over a plain tube type heat exchanger of the same size. The heat exchanger assembly is completed by fitting up a plurality of return bends 42 to the ends of the hairpin tubes 36 so as to form one or more closed fluid flow paths through the tubes of the heat exchanger.

The tube-to-fin joint may also be formed by brazing as will be evident to those of ordinary skill in the art.

### EXAMPLE 2

This Example demonstrates the effects of exposure to formicary acid on metal strips and tubes, including the tin brass alloy of the present invention, and those commonly used in air conditioning and refrigeration systems, such as the C220 alloy, which is a standard brass alloy, and the C122 alloy, which is currently used for many AC conduits.

To perform the formicary corrosion resistance tests, one approximately 1"x1" specimen of each alloy (as summarized in Table 1), separated by Teflon tubing, was suspended in the headspace of three sealed jars, each of which contained a 100 ml aliquot of formic acid solution with a concentration of 500 ppm.

**Table 1**

| Nominal Alloy Compositions (%) | | | | | | |
|---|---|---|---|---|---|---|
| Alloy | Cu | Pb | Fe | Sn | Zn | P |
| C122 | rem* (incl. Ag) | | | | | 0,015 -0,040 |
| C220 | 89.0-91.0 | 0.05 max. | | | rem.* | |
| C422 | 86.0-89.0 | 0.05 max. | 0.05 max. | 0.8-1.4 | rem.* | 0.35 max. |
| C425 | 87.0-90.0 | 0,05 max. | 0.05 max. | 1.5-3.0 | rem.* | 0.35 max. |

| | | | | | | |
|---|---|---|---|---|---|---|
| *rem = Remainder | | | | | | |

An additional three jars contained a 100 ml aliquot of acetic acid solution, also at a concentration of 500 ppm. The seventh jar was a control with a 100 ml aliquot of de-ionized water (DIW). The jars were exposed to cyclic heating essentially as described in Example 3 below. One jar containing formic acid solution and another containing acetic acid solution was removed from the test at 10, 20 and 30 days. The DIW control was removed at 30 days.

Upon removal, the metal specimens were mounted in epoxy for evaluation of the depth of formicary attack and pitting density. Pitting density was calculated as the number of pits visible on 16 mm of the strip edges at 25x magnification. Semi-quantitative data was obtained which related the time of exposure to the depth of attack on a cross section of the test specimen. The depth of attack was determined with the use of an eye reticule on a metallographic microscope.

The results presented in Table 2 demonstrate that, for the formic acid test, the trend of formicary corrosion susceptibility (ranked by maximum pit depth) at 30 days was C422 <C425 <C122 <C220. For the acetic acid test the trend for formicary corrosion susceptibility (ranked by maximum pit depth) at 30 days was C422 <C122 <C220 <C425.

**Table 2**

| Outokumpu Formicary Strip Test 40/20°C, 500ppm of Formic Acid or Acetic Acid | | | | | | | | |
|---|---|---|---|---|---|---|---|---|
| Alloy | | Formic | | | Acetic | | | DIW |
| | Days | 10 | 20 | 30 | 10 | 20 | 30 | 30 |
| C122 | Max | 0,9 | 3,6 | 9,3 | 0,3 | 0,6 | 0,7 | No Pits Observed |
| | Avg | 0.8 | 1.9 | 2.9 | 0.3 | 0.4 | 0.6 | |
| | Density | 21 | 24 | 17 | 0 | 0 | 0 . | |
| C220 | Max | 0.7 | 3.6 | 10.0 | 0.6 | 0.5 | 0.9 | |
| | Avg. | 0.6 | 2.4 | 7.2 | 0.4 | 0.4 | 0.4 | |
| | Density | 6 | 8 | 10 | 6 | 0 | 3 | |
| C422 | Max | 0.3 | 1.2 | 1.3 | 0.2 | 0.5 | 0.5 | |
| | Avg. | 0.3 | 0.9 | 1.0 | 0.2 | 0.4 | 0.4 | |
| | Density | 8 | 26 | 25 | 0 | 2 | 0 | |
| C425 | Max | 0.6 | 0.9 | 1.6 | 0.9 | 0.5 | 1.1 | |
| | Avg. | 0.6 | 0.8 | 1.1 | 0.8 | 0.4 | 0.7 | |
| | Density | 30 | 32 | 52 | 5 | 4 | 0 | |

Data obtained from a similar experiment, which also included tubes formed from the compositions in Table 1 is provided in Table 3.

**Table 3**

| Comparing Formicary Susceptibility of Alloys C220 and C422 to Alloy C122 | | | | | |
|---|---|---|---|---|---|
| Time Span (days) | Formic Acid (ppm) | Alloy Shape | Alloy | Max pit depth or Time to Failure | Multiple to C122 |
| 28 | 10,000 | Tube | C122 | 12.5 mils | - |
| | | | C220 | 5.5 mils | 2.3 |
| 10 | 10,000 | Strip | C122 | 72 mils | - |
| | | | C422 | 0.9 mils | 8.0 |
| 45 | 2,500 | Strip | C122 | 8 1 mils | - |
| | | | C422 | 3.2 mils | 2.5 |
| 56 | 97 | Strip | C122 | 6.4 rnils | - |
| | | | C422 | 2.9 mils | 2.2 |

Also provided in Table 3 is data related to the formicary corrosion resistive properties of C422 expressed as multiples of the resistance of C122. Thus, this example demonstrate that the tin brass alloy C422 is significantly more resistant to formicary corrosion than other alloys, including those used to make the heat transfer tubes commonly used in air conditioning and refrigeration systems.

### EXAMPLE 3

This Example demonstrates that heat transfer tubes comprising the tin brass alloy C422 have superior formicary corrosion resistance relative to other compositions. The components of the tubes used in this Example are summarized in Table 4.

**Table 4**

| Alloy Compositions (%) | | | | | | |
|---|---|---|---|---|---|---|
| Alloy | Cu | Pb | Fe | Sn | Zn | P |
| C122 | Rem*(incl Ag) | | | | | 0.015-0.040 |
| C220 | 89.0-91.0 | 0.05 Max | 0.05 Max | | Rem* | |
| C422 | 86.0-89.0 | 0.05 Max | 0.05 Max | 0.8-1.4 | Rem* | 0.35 Max |

| | | | | | | |
|---|---|---|---|---|---|---|
| *Rem = Remainder | | | | | | |

A comparison of formicary corrosion resistance of C122, C220 and C422 was performed as follows.

Tubes formed from each of the metal compositions in Table 4 were suspended above 100 ml aliquots of approximately 500 parts per million (ppm) formic acid in de-ionized (DI) water in the bottom of pressurized test vessels. Because the copper tubes were suspended above the test liquid, the tubes only came into contact with corrosive vapor and condensate. A temperature cycle found to optimize formicary corrosion was used to expose the tubes to the vapors and condensate. In general, the temperature cycle comprised keeping the test vessels in an oven at a temperature of 40°C at night and on weekends. For nine hours of each weekday, the oven was turned off and the oven door opened to allow the test vessels to cool to room temperature (20°C), at which time the test vessels were evaluated by checking pressure. When a significant drop in pressure was detected, the leak was located by bubble detection through immersion in water and/or with a drop of liquid soap. Sections of the tubes including the leak sources were cut from the copper tubes, mounted in a vacuum impregnating resin, polished to the location of the leak and microphotographs taken. It was thereby determined that tube leakages were caused by formicary pits corroding through the walls of the tubes.

A summary of the corrosion resistance test results (as measured by time to tube failure) for alloys C122, C220, and C422 is presented in Table 5. When the two C422 tubes had not failed after approximately 26 weeks of exposure, they were removed and examined. Formicary corrosion was present in both tubes, but was not observed to have processed to half of the 12.5 mm wall thickness. The solutions to which tubes made of C422 were exposed were tested to ensure that adequate levels of formic acid persisted through the end of the experiment. The level of formic acid had dropped to 342 ppm and 368 ppm respectively, indicating there remained sufficient corrodent available throughout the test.

Accordingly, the results summarized in Table 5 demonstrate the superior formicary corrosion resistant properties of the C422 alloy relative to compositions commonly used to form heat transfer tubes of current air conditioning and refrigeration systems. In addition to the data summarized in Table 5, it was noted that the observed pit depths in these experiments was less than half the tube wall thickness when the C422 samples were removed after approximately 26 weeks without leaking. This is in marked contrast to the maximum pit depth for C122 and C220, which had maximum pit depths in multiples of the size of those observed for C422. These data emphasize the relative benefit of the tube walls being formed essentially in their entirety from formicary resistant alloys as described herein, as opposed to surface coating.

**Table 5 Comparison of Formicary Susceptibility**

| Time Span (days) | Formic Acid (ppm) | Alloy Shape | Alloy | Time to Failure | Multiple to C122 |
|---|---|---|---|---|---|
| 184 | 500 | Tube | C122 | 7 days | - |
| | | | C122 | 11-13 days | - |
| | | | C220 | 11-13 days | 1.6-1.9 |
| | | | C220 | Inconclusive | |
| | | | C422 | 25.5 weeks | >25.5 |
| | | | C422 | 26 weeks | >26 |
| 100 | 500 | Tube | C122 | 10 days | - |
| | | | C122 | 7 days | 1 |
| | | | C220 | 35 days | 5 |
| | | | C220 | 6 days | 0.86 |
| | | | C422 | 100 days | >14 |
| | | | C422 | 100 days | >14 |

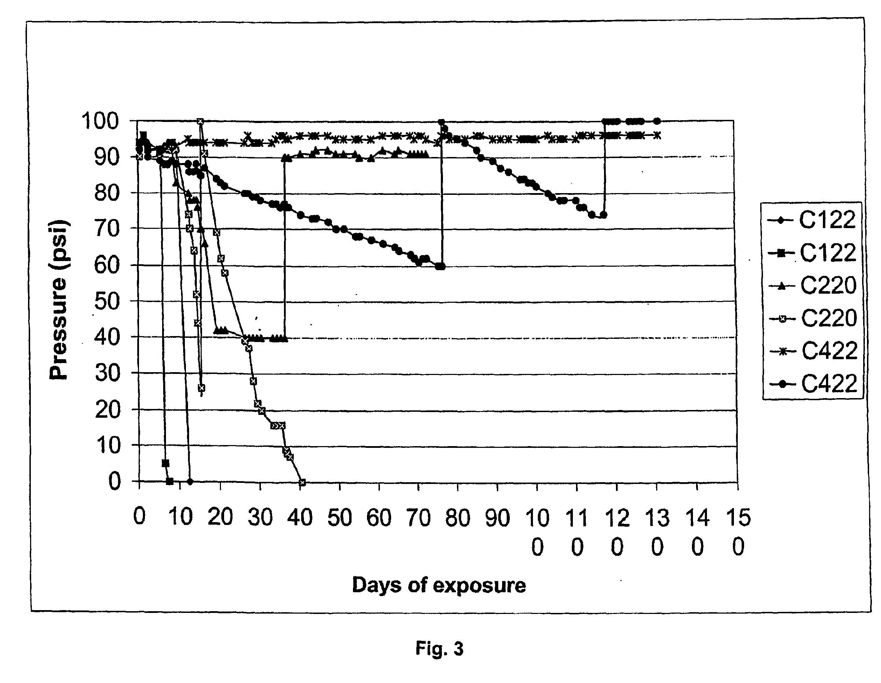

Results from a similar experiment are graphically summarized in Fig. 3, wherein a pressure drop to zero indicates a failure has occurred and the tube has leaked. Some discontinuities in the data of Fig. 3 were caused by a condition that was unrelated to the tube performance. Nonetheless, the results presented in herein demonstrate that, after exposure to a corrosive environment for 150 days, the tin brass alloy C422 was able to maintain pressure without leaking, while compositions commonly used for ACR conduits failed relatively rapidly.

Thus, this example demonstrates that tin brass alloy No. C422 has superior formicary corrosion resistant properties in comparison with tubes constructed of predominantly copper or brass.

While the invention has been described in connection with certain embodiments, it is intended to cover such alternatives, modifications; and equivalents as may be included within the scope of the invention as defined by the appended claims.

## Claims

1. A formicary corrosion resistant heat transfer tube comprising a tin brass alloy, consisting essentially of between 86.0% and 89.0% copper, between 0.8%-3.0% tin, no more than 0.05% lead, no more than 0.05% iron, no more than 0.35% phosphorus, and from 9.6% to 13.2% zinc.

2. The heat transfer tube of claim 1, wherein the tube alloy consists essentially of between 86.0%-89.0% copper and between 0.8%-1.4% tin.

3. The heat transfer tube of claim 1, wherein the tube alloy consists essentially of between 87.0%-90.0% copper and between 1.5%-3.0% tin.

4. The heat transfer tube of any one of claims 1 to 3, wherein the tube is formed by welding, extrusion or cast-and-rolling.

5. A heat exchanger assembly comprising the heat transfer tube of any one of claims 1 to 3, further comprising a plurality of plate fins and at least one tube sheet.

6. A heat exchanger assembly for use in ACR systems, the heat exchanger comprising a formicary corrosion resistant heat transfer tube of any one of claims 1 to 3.

7. Use of a tin brass alloy consisting essentially of between 86.0% and 89.0% copper, between 0.8%-3.0% tin, no more than 0.05% lead, no more than 0.05% iron, no more than 0.35% phosphorus, and from 9.6% to 13.2% zinc for forming a heat transfer tube wall.

8. The use of claim 7, wherein the tube alloy consists essentially of between 86.0%-89.0% copper and between 0.8%-1.4% tin.

9. The use of claim 7, wherein the tube alloy consists essentially of between 87.0%-90.0% copper and between 1.5%-3.0% tin.

10. The use of any one of claims 7 to 9, wherein the heat exchanger according to claim 5 is installed in an ACR system.

## Patentansprüche

1. Ein nestkorrosionsbeständiges Wärmeübertragungsrohr, bestehend aus einem Zink-Messing Materialgemisch, bestehend im Wesentlichen aus 86,0 % bis 89,0 % Kupfer, 0,8 % bis 3,0 % Zink, nicht mehr als 0,05 % Blei, nicht mehr als 0,05 % Eisen, nicht mehr als 0,35 % Phosphor und 9,6 % bis 13,2 % Zink.

2. Ein Wärmeübertragungsrohr nach Anspruch 1, wobei das Materialgemisch des Rohrs im Wesentlichen aus 86,0 % bis 89,0 % Kupfer und 0,8 % bis 1,4 % Zink besteht.

3. Ein Wärmeübertragungsrohr nach Anspruch 1, wobei das Materialgemisch des Rohrs im Wesentlichen aus 87,0 % bis 90,0 % Kupfer und 1,5 % bis 3,0 % Zink besteht.

4. Ein Wärmeübertragungsrohr nach einem der Ansprüche 1 bis 3, wobei das Rohr durch Schweißtechnik, Extrusion oder eine Gieß- und Rolltechnik geformt wird.

5. Eine Wärmeaustauscheinheit bestehend aus einem Wärmeübertragungsrohr nach einem der Ansprüche 1 bis 3, weiterhin bestehend aus einer Vielzahl von Lamellen und zumindest einer Rohrplatte.

6. Eine Wärmeaustauscheinheit zur Benutzung in ACR Systemen, der Wärmetausch besteht aus einem nestkorrosionsbeständiges Wärmeübertragungsrohr nach einem der Ansprüche 1 bis 3.

7. Verwendung eines Zink-Messing Materialgemisches im Wesentlichen bestehend aus 86,0 % bis 89,0 % Kupfer, 0,8 % bis 3,0 % Zink, nicht mehr als 0,05 % Blei, nicht mehr als 0,05 % Eisen, nicht mehr als 0,35 % Phosphor und 9,6 % bis 13,6 % Zink zum Formen der Wand des Wärmeübertragungsrohrs.

8. Die Verwendung nach Anspruch 7, wobei das Materialgemisch des Rohrs im Wesentlichen aus 86,0 % bis 89,0 % Kupfer und 0,8 % bis 1,4 % Zink besteht.

9. Verwendung nach Anspruch 7, wobei das Materialgemisch des Rohrs im Wesentlichen aus 87,0 % bis 90,0 % Kupfer und 1,5 % bis 3,0 % Zink besteht.

10. Die Verwendung nach einem der Ansprüche 7 bis 9, wobei der Wärmeaustauscher gemäß Anspruch 5 in einem ACR System installiert ist.

## Revendications

1. Tube de transfert thermique résistant à la corrosion de type fourmilière comprenant un alliage de laiton à l'étain, constitué essentiellement d'entre 86,0 % et 89,0 % de cuivre, d'entre 0,8 % et 3,0 % d'étain, d'au plus 0,05 % de plomb, d'au plus 0,05 % de fer, d'au plus 0,35 % de phosphore, et de 9,6 % à 13,2 % de zinc.

2. Tube de transfert thermique selon la revendication 1, dans lequel l'alliage du tube est constitué essentiellement d'entre 86,0 % et 89,0 % de cuivre et d'entre 0,8 % et 1,4 % d'étain.

3. Tube de transfert thermique selon la revendication 1, dans lequel l'alliage du tube est constitué essentiellement d'entre 87,0 % et 90,0 % de cuivre et d'entre 1,5 % et 3,0 % d'étain.

4. Tube de transfert thermique selon l'une quelconque des revendications 1 à 3, dans lequel le tube est formé par soudage, extrusion ou coulée-laminage.

5. Assemblage d'échangeur de chaleur comprenant le tube de transfert thermique de l'une quelconque des revendications 1 à 3 et comprenant en outre une pluralité de plaques ailettes et au moins une plaque tubulaire.

6. Assemblage d'échangeur de chaleur à utiliser dans des systèmes de climatisation et de réfrigération (ACR), l'échangeur de chaleur comprenant un tube de transfert thermique résistant à la corrosion de type fourmilière de l'une quelconque des revendications 1 à 3.

7. Utilisation d'un alliage de laiton à l'étain constitué essentiellement d'entre 86,0 % et 89,0 % de cuivre, d'entre 0,8 % et 3,0 % d'étain, d'au plus 0,05 % de plomb, d'au plus 0,05 % de fer, d'au plus 0,35 % de phosphore, et de 9,6 % à 13,2 % de zinc, pour la formation d'une paroi de tube de transfert thermique.

8. Utilisation selon la revendication 7, dans laquelle l'alliage du tube est constitué essentiellement d'entre 86,0 % et 89,0 % de cuivre et d'entre 0,8 % et 1,4 % d'étain.

9. Utilisation selon la revendication 7, dans laquelle l'alliage du tube est constitué essentiellement d'entre 87,0 % et 90,0 % de cuivre et d'entre 1,5 % et 3,0 % d'étain,

10. Utilisation selon l'une quelconque des revendications 7 à 9, dans laquelle l'échangeur de chaleur selon la revendication 5 est installé dans un système ACR.
